# EUROPÄISCHE PATENTSCHRIFT

(11) **EP 2 507 346 B1**
(45) Veröffentlichungstag und Bekanntmachung des Hinweises auf die Patenterteilung: **30.09.2015**
(21) Anmeldenummer: 11719757.4
(22) Anmeldetag: 14.02.2011
(51) Int. Cl.: C10J 3/26, C10J 3/62, C10J 3/66, C10J 3/74, F02B 43/08

(54) **VORRICHTUNG UND EIN VERFAHREN ZUR THERMOCHEMISCHEN HARMONISIERUNG UND VERGASUNG VON FEUCHTIGKEITS-BIOMASSE**
DEVICE AND METHOD FOR THE THERMOCHEMICAL HARMONISING AND GASIFICATION OF WET BIOMASS
DISPOSITIF ET PROCÉDÉ POUR L'HARMONISATION THERMOCHIMIQUE ET LA GAZÉIFICATION DE BIOMASSE À TENEUR EN HUMIDITÉ

(43) Veröffentlichungstag der Anmeldung: 10.10.2012
(73) Patentinhaber: ZBB GmbH, 68167 Mannheim (DE)
(72) Erfinder: DEMIR, Elhan, 68167 Mannheim (DE)
(74) Vertreter: Sartorius, Peter
(86) Internationale Anmeldenummer: PCT/DE2011/075023
(87) Internationale Veröffentlichungsnummer: WO 2012/110012

(56) Entgegenhaltungen:
- WO-A1-2010/063206
- DE-A1-102008 047 201

## Beschreibung

Die Erfindung betrifft eine Vorrichtung zur thermochemischen Carbonisierung und Vergasung von Feuchtigkeits-, insbesondere wasserhaltiger und/oder trockener, Biomasse zur Herstellung eines Energie- und/oder Rohstoffträgers mit Hilfe eines eine verschliessbare Einlassöffnung aufweisenden, beheizbaren Carbonisierungsreaktors, in dem die Biomasse in einen festen, schüttbaren oder gasförmigen Energie- und/oder Rohstoffträger umgewandelt wird und über eine verschliessbare Auslassöffnung an einen an den Carbonisierungsreaktor angeschlossenen Abkühlbehälter zur Zwischenlagerung des Energie- und/oder Rohstoffträgers abgegeben wird, der mit einem sich daran anschliessenden Vergaserreaktor in Verbindung steht, in dem aus der Biomasse Gas und Abfallstoffe, wie Asche, abgeschieden werden.

### Stand der Technik

Biomassevergasung ist allgemein bekannt. Hierunter wird ein Prozess verstanden, bei dem Biomasse mit Hilfe eines Vergasungs- oder Oxidationsmittels (meist Luft, Sauerstoff Kohlendioxid oder Wasserdampf) durch eine Teilverbrennung in ein Produkt- oder Brenngas umgewandelt wird.

Über die Vergasung kann die als Festbrennstoff vorliegende Biomasse in einen gasförmigen Sekundärbrennstoff umgewandelt werden, der in verschiedenen Nutzungsoptionen wie z. B. der Stromerzeugung oder als Kraft- und Treibstoff (Brenngas) oder für die Nutzung als Synthesegas für die chemische Synthese effizienter eingesetzt werden kann. Analoge Verfahren existieren auch für andere Festbrennstoffe, speziell für die Vergasung von Kohle (Kohlevergasung).

Die Vergasung von Biomasse setzt nach der Trocknung bei Temperaturen von ca. 150 °C ein, wobei erst Wasserdampf und Sauerstoff austreten. Bei höheren Temperaturen werden die Festbestandteile der Biomasse. Dieses Gas entzündet sich, sobald Sekundärluft zugeführt wird, der Flammpunkt liegt bei 230 bis 280 °C.

Bei der technischen Biomassevergasung handelt es sich um eine Teilverbrennung mit Hilfe eines Vergasungs- oder Oxidationsmittels (meist Luft, Sauerstoff, Kohlendioxid oder Wasserdampf) ohne Entzündung bei Temperaturen von 700 bis 900 °C, bei der diese nicht wie bei der Verbrennung zu Kohlendioxid (CO₂) sondern im Wesentlichen zu Kohlenmonoxid (CO) oxidiert wird. Weitere Komponenten des entstehenden Gases sind Wasserstoff (H₂), Kohlendioxid (CO₂), Methan (CH₄), Wasserdampf (H₂O) sowie abhängig von der eingesetzten Biomasse eine Reihe von Spurengasen und Verunreinigungen. Es verbleibt ein fester Rückstand (Asche und Koks), außerdem können Teile des Produktgases bei Temperaturabsenkung auskondensieren (Teer und Wasser).

Das brennbare Produktgas kann in einem anschließenden Prozess durch eine Verbrennung (Brenngas) oder eine chemische Synthese (Synthesegas) unter Abgabe von Energie (exothermer Prozess) weiter oxidiert werden. Erfolgt die Vergasung mit Luft, so wird das dadurch mit Stickstoff verdünnte Produktgas häufig auch als Schwachgas (LCV, Low Calorific Value Gas) bezeichnet.

Die hydrothermale Carbonisierung (etwa: "wässrige Verkohlung bei erhöhter Temperatur") ist ein chemisches Verfahren zur einfachen und hocheffizienten Herstellung von Braunkohle, Synthesegas, flüssigen Erdöl-Vorstufen und Humus aus Biomasse unter Freisetzung von Energie. Der Prozess, der die in der Natur in 50.000 bis 50 Millionen Jahren ablaufende Braunkohle-Entstehung ("Inkohlung") innerhalb weniger Stunden technisch nachahmt.

Der bisher bekannte Arbeitsprozess ist wie folgt. In einem Druckgefäß wird Biomasse, insbesondere pflanzliches Material, (in der nachfolgenden Reaktionsgleichung vereinfachend als Zucker mit der Formel C₆ H₁₂ O₆ umschrieben) zusammen mit Wasser, isochor, auf 180 °C erhitzt. Dabei kann der Druck auf 2 MPa ansteigen. Während der Reaktion werden auch Oxoniumionen gebildet, welche den pH-Wert pH 5 und tiefer senken. Diesen Schritt kann man durch Zugabe einer geringen Menge Zitronensäure beschleunigen. Hierbei muss beachtet werden, dass bei niedrigen pH-Werten mehr Kohlenstoff in die wässrige Phase übergeht. Die ablaufende Reaktion ist exotherm, d. h. es wird Energie freigesetzt. Nach 12 Stunden ist der Kohlenstoff der Edukte vollständig umgesetzt, 90 bis 99 % des Kohlenstoffes liegt als wässriger Schlamm aus porösen Braunkohle-Kügelchen (C₆H₂O) mit Porengrößen zwischen 8 und 20 nm als feste Phase vor, die restlichen 1 bis 10 % Kohlenstoff sind entweder in der wässrigen Phase gelöst oder wurden zu Kohlenstoffdioxid umgewandelt. Die Reaktionsgleichung für die Bildung der Braunkohle lautet:

C₆H₁₂O₆ → C₆H₂O + 5 H₂O ΔH = -1.105 kJ/mol

Die Reaktion kann in mehreren Stadien bei unvollständiger Wasserabspaltung abgebrochen werden, wobei man unterschiedliche Zwischenprodukte erhält. Bei Abbruch nach wenigen Minuten entstehen flüssige Zwischenprodukte, lipophile Stoffe, deren Handhabung wegen ihrer hohen Reaktivität allerdings sehr schwierig ist. Im Anschluss daran polymerisieren diese Stoffe und es bilden sich Torfähnliche Strukturen, die nach ca. 8 Stunden als Zwischenprodukte vorliegen.

Theoretisch ließe sich die Reaktion mit bestimmten Metallpartikeln katalysieren, diese würden aber recht schnell mit den Produkten zugesetzt werden und ihre Funktion verlieren.

Durch die exotherme Reaktion der hydrothermalen Carbonisierung werden etwa 3/8 des auf die Trockenmasse bezogenen Heizwertes der Biomasse freigesetzt (bei hohem Lignin-, Harz- und/oder Ölgehalt immer noch mindestens 1/4). Bei geschickter Prozessführung könnte es gelingen, mittels dieser Abwärme aus nasser Biomasse trockene Biokohle herzustellen und eventuell einen Teil der umgewandelten Energie zur Energieerzeugung zu nutzen.

Das Wichtigste soll sein, dass man eine einfache Methode in der Hand hat, atmosphärisches CO₂ über den Umweg von Biomasse in eine stabile und ungefährliche Lagerform, eine Kohlenstoff-Senke, zu verwandeln." Mit dem Verfahren der hydrothermalen Carbonisierung, wie auch mit anderen Verfahren zur Verkokung von Biomassen, ließe sich so überall auf der Welt dezentral eine große Menge an Kohlenstoff dauerhaft speichern. Wesentlich sicherer als die derzeit diskutierte flüssige oder gasförmiges Sequestrierung von Kohlendioxid. Bei ausreichender chemischer Stabilität der Kohle könnte sie auch sehr gut zur Verbesserung von Böden eingesetzt werden.

Der künstlich erzeugte Humus könnte zur Wiederbegrünung erodierter Flächen genutzt werden. Durch das auf diese Weise verstärkte Pflanzenwachstum könnte zusätzliches Kohlenstoffdioxid aus der Atmosphäre gebunden werden, so dass im Endeffekt eine Kohlenstoffeffizienz größer als 1 bzw. eine negative CO₂-Bilanz erreichbar wäre. Der entstandene Kohleschlamm ließe sich zur Verbrennung bzw. zum Betrieb neuartiger Brennstoffzellentypen mit einem Wirkungsgrad von 60 % verwenden, wie sie derzeit an der Harvard-Universität erforscht werden. Zur Erzeugung von herkömmlichen Kraftstoffen müsste das Kohlenstoff-Wasser-Gemisch zunächst stärker erhitzt werden, so dass so genanntes Synthesegas, ein Gasgemisch aus Kohlenmonoxid und Wasserstoff, entsteht:

C₆H₂O + 5 H₂O → 6CO + 6 H₂

Alternativ könnten die flüssigen Intermediate, die bei der unvollständigen Umsetzung der Biomasse entstehen, zur Kraftstoff- sowie zur Kunststoff-Herstellung genutzt werden.

Außerdem kann der entstandene Kohlenschlamm brikettiert und als umweltfreundliche - weil kohlendioxidneutrale - "Naturkohle" vermarktet werden, welche im Vergleich mit der Ausgangs-Biomasse mittels Abscheiden/Filtern/Verpressen mit niedrigerem Energieeinsatz zu trocknen sein sollte und durch ihren höheren Energiegehalt pro Volumen/Masse weniger Transportkosten verursachen sowie kleinere Lagerflächen erfordern würde.

Das große Problem bei der Herstellung von Synthesegas aus Biomasse ist die Teer-Bildung, die bei hydrothermaler Prozessführung weitgehend vermieden werden kann. Allerdings ist dann nicht einzusehen, warum dafür der Umweg über Biokohle gegangen werden soll. Ein Biomasse-Slurry sollte sich unter überkritischen Bedingungen bei 400 °C und einem Druck von mindestens 221,2 Bar (Kritische Temperatur von Wasser ist 374 °C) in CO₂ und H₂ zerlegen lassen, was allerdings einen hohen Energieeinsatz bedingt.

Ungeklärt bei dieser Problematik ist eine geeignete Prozessführung, sowie Probleme bei der Sammlung, dem Transport und der Lagerung anfallender Biomasse. Diese Vorgänge benötigen ebenfalls Energie, diese sollte geringer sein als durch die hydrothermale Carbonisierung freigesetzt wird.

Letztlich geht jedem Verbrennungsprozess von Biomasse ein Vergasungsprozess voraus, da nicht diese selbst, sondern grundsätzlich nur die aus der Biomasse austretenden Gase brennbar sind

Bei der dem Stand der Technik entsprechenden Carbonisierung von Biomasse wie Hydrothermale Carbonisierung HTC in einer wässrigen oder dampfförmigen Umgebung, wird dem Reaktor von außen zusätzlich Wasser oder Wasserdampf zugeführt. Das bedeutet einen erheblichen zusätzlichen Aufwand beim Bau und Betrieb der Carbonisierungsanlage. Zur Bereitstellung des Wassers oder des Dampfes und bei dem für die Erwärmung des Wassers wird Heizenergie benötigt. Die Verwertung bzw. Entsorgung des Prozesswassers nach Ende der Carbonisierung stellt eine zusätzliche Aufgabe dar, die erheblichem technischen und finanziellen Aufwand verbunden ist.

Bei den bekannten Verfahren entstehen Gase und Dämpfe. Diese stellen oftmals ein zusätzliches Problem dar, das mit technischen Maßnahmen und mit erheblichen Zusatzkosten gelöst werden muss.

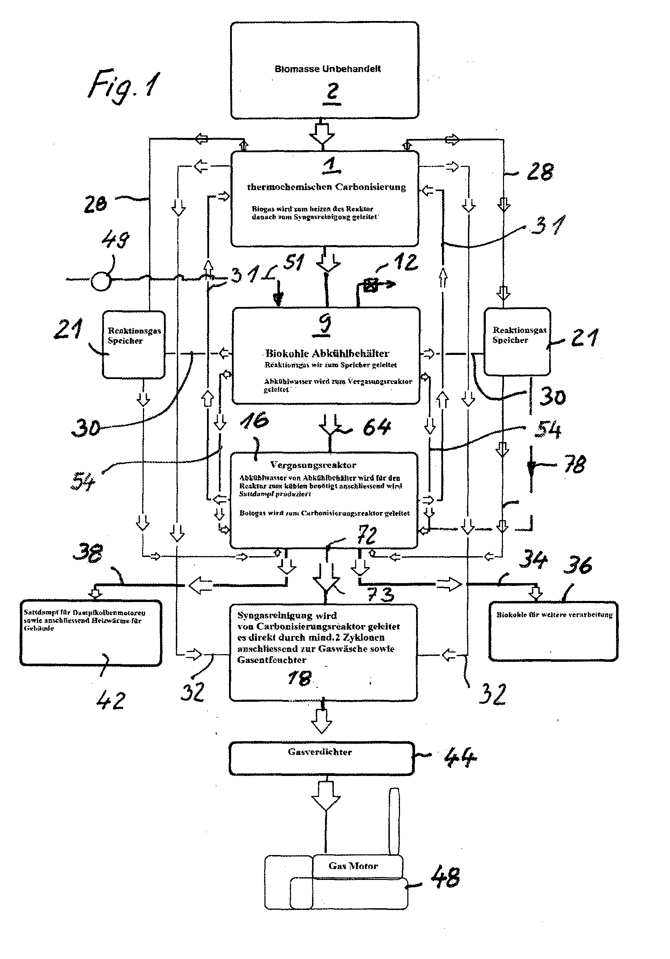

Das Dokument 10 2008 047 201 A1, zeigt bereits (siehe Fig. 1) ein Verfahren sowie eine Vorrichtung zur Carbonisierung und Vergasung von Biomasse, wobei dem eine verschließbare Einlassöffnung aufweisenden (2), der von einem Heizmantel umgeben ist, Wärmeenergie aus dem Carbonisierungsreaktor Vergasungsreaktor (8) und Motor (30) zugeführt wird, über eine Auslassöffnung einen Zwischenlagerungsbehälter (6) angeschlossenen ist, der mit einem sich daran anschließenden Vergaserreaktor (16) in Verbindung steht, in dem aus der Biomasse Gas (via (9)) und Abfallstoffe (via (37)) abgeschieden werden und wobei der Carbonisierungsreaktor (2) an einen Gasspeicher (54) angeschlossen ist. Eine derartige Anlage ist sehr aufwändig und teuer und arbeitet gegenüber dem erfindungsgemäßen Verfahren sowie der Vorrichtung mit einem wesentlich schlechteren Wirkungsgrad.

Bei den bekannten Verfahren entstehen Gase und Dämpfe. Diese stellen oftmals ein zusätzliches Problem dar, das mit technischen Maßnahmen und mit erheblichen Zusatzkosten gelöst werden muss.

Der Erfindung liegt die Aufgabe zugrunde, in etwa den gesamten Kohlenstoff und Gase aus der Biomasse zu gewinnen und diese auf einfache und kostengünstige Weise herzustellen.

Die Aufgabe wird erfindungsgemäß dadurch gelöst, dass
a) dem Carbonisierungsreaktor, der mit einem Heizelement wirkungsmässig verbunden, insbesondere von einem Heizmantel umgeben ist, ist Fremdwärmeenergie zuführbar und über eine weitere den Vergaserreaktor und den Carbonisierungsreaktor verbindende Leitung weitere Wärmeenergie zumindest aus dem Vergaserreaktor zuführbar.
b) dem Vergaserreaktor ist über eine den Vergaserreaktor und den Abkühlbehälter verbindende Leitung Kühlenergie aus dem Abkühlbehälter zuführbar,
c) dem Abkühlbehälter ist Feuchtigkeit, insbesondere Wasser, über eine weitere Leitung zuführbar, um eine annähernd konstante Prozessführung sicherzustellen,
d) aus dem Carbonisierungsreaktor und/oder dem Abkühlbehälter ist Reaktionsgas über eine den Carbonisierungsreaktor und den Gasspeicher verbindende Leitung einem Gasspeicher zuführbar, wobei das Reaktionsgas über eine den Vergaserreaktor und den Gasspeicher verbindende Leitung wieder dem Vergaserreaktor zuführbar ist.

Hierdurch wird auf einfache und kostengünstige energiesparende Weise mit einer leicht zu erstellenden Anlage aus der Biomasse Kohlenstoff, insbesondere Kohle, zur Beheizung und zum Antrieb von Aggregaten und darüber auch Gase zur Verwendung unterschiedlicher Verbraucher wie Gasmotoren, Gasturbinen oder Heizungsanlagen gewonnen.

Das erfindungsgemäße Verfahren verwendet vorzugsweise wasserhaltige Biomasse, die überwiegend als Reststoff in Siedlungen anfällt und in vielen Fällen mit höherem Aufwand entsorgt werden muss. In diesem Verfahren kann aber auch andere Biomasse, die nicht als Reststoff entsorgt werden muss, eingesetzt werden.

Für die Umsetzung des Verfahrens werden zumindest zwei Reaktoren eingesetzt. Dies ist einerseits der Carbonisierungsreaktor und andererseits der Vergasungsreaktor.

Im Gegensatz dazu wird bei dem hier beschriebenen Verfahren der für die Verdampfung erforderliche Energieaufwand durch Nutzung von Wärme, die bei der Abkühlung des erzeugten Reaktorgases frei wird, bestritten.

Nach dem erfindungsgemäßen Verfahren produziertes Reaktorgas ist auf Grund der dem Vergasungsvorgang mit vorgeschalteter Carbonisierung der Biomasse fast vollständig frei von Teer bzw. teerbildenden Bestandteilen. Dies wird insbesondere auch dadurch erreicht, dass durch die Prozessführung aus der Biomasse die flüchtigen nicht verbrennbaren Anteile von bisher 80% auf ca. 30 % gesenkt werden kann. Vergleiche hierzu Tabelle 1 und 2. Tabelle 1 gibt die Werte einer zum Stand der Technik gehörenden Anlage und Tabelle 2 die erfindungsgemäßen Anlage wieder.

Das Reaktorgas wird nach Austritt aus dem Vergasungsreaktor durch eine Staubabscheidung von Festpartikeln, z. B. Feinstaub, gereinigt und kann danach zur Erzeugung von Strom und Wärme genutzt werden.

Durch den geringen Anteil von zusätzlichem Wasser oder Heizdampf entsteht kein oder kaum Prozesswasser. Es entsteht danach auch kein zusätzlicher Aufwand durch Abwasserbehandlung oder Abwasserentsorgung, da das zugeführte Wasser in der Anlage verdampft wird.

Die Anlage kann in einem kleinen technischen Maßstab unter Verwendung von Gasmotor-Generator-Sätzen mit Nutzwärmeauskopplung für die Versorgung begrenzter lokaler Siedlungsbereiche mit Strom und Wärme und parallel dazu für die Entsorgung von geeigneten Siedlungsabfällen verwendet werden.

Bei dem erfindungsgemäßen Verfahren wird das Problem der Verunreinigung der Gase und der Teerbildung auch dadurch auch gelöst, dass eine fast vollständige interne Entsorgung von kritischen gas- und dampfförmigen Reaktionsprodukten durch Verbrennung im Vergasungsreaktor durchgeführt wird.

Dies führt zur Vermeidung von CO₂, wobei hierbei nur ein geringer Teil der möglichen Energie frei werden würde.

Ein Vorteil der hydrothermalen Carbonisierung ist, dass die Verwendbarkeit pflanzlicher Biomasse nicht auf Pflanzen mit niedrigen Feuchtegehalten beschränkt und die ohne Kohlendioxid-Ausstoß gewinnbare Energie nicht durch notwendige Trocknungsmaßnahmen reduziert wird bzw. bei Bedarf direkt zur Trocknung der Endprodukte nutzbar ist. So kann selbst bisher kaum nutzbares Pflanzenmaterial wie Verschnitt aus Gärten und von städtischen Grünflächen zur Energieerzeugung dienen, wobei gleichzeitig Kohlendioxid eingespart wird, welches sonst - zusammen mit dem noch klimaschädlicheren Methan - bei der bakteriellen Umsetzung der Biomasse anfallen würde. Energiesparend arbeitet die Gesamtanlage auch deshalb, weil annähernd der gesamte Anteil der freigesetzten Wärmeenergie dem Arbeitsprozess wieder zugeführt wird.

Hierzu ist es vorteilhaft, dass die im Carbonisierungsreaktor aufgenommene feuchtigkeitshaltige Biomasse bei Drücken zwischen 5 und 30 bar, vorzugsweise bei Drücken zwischen 15 und 25, insbesondere bei Drücken von etwa 20 bar und bei Temperaturen zwischen 200° und 1200°C, vorzugsweise zwischen 400° und 800°C, verdampft und Reaktionsgas gebildet wird, das mittel- oder unmittelbar dem Vergaserreaktor über eine Leitung zuführbar ist.

Auch ist es von Vorteil, dass der Vergaserreaktor in einem Temperaturbereich zwischen 1200° und 1800°C, vorzugsweise zwischen 1000° und 1400°C, arbeitbar und während des Arbeitsprozesses Wärmeenergie über eine den Vergaserreaktor und den Carbonisierungsreaktor verbindende Leitung abgebbar ist.

Eine zusätzliche Möglichkeit ist gemäß einer Weiterbildung der Erfindung, dass ein Zyklonabscheider und/oder Gasreiniger über eine Leitung an den Vergaserreaktor angeschlossen ist, wobei zwischen Zyklonabscheider und/oder Gasreiniger ein Wärmetauscher vorgesehen sein kann, der Gas auf die Betriebstemperatur des Wärmetauschers zwischen 40°C und 80°C oder zwischen 50°C und 60°C absenken kann und die daraus resultierende abgeführte Energie einer Heizung und/oder dem Arbeitsprozess der Anlage wieder zuführbar und die vom Wärmetauscher abgegebene Wärmeenergie über eine Leitung einem Verbraucher, wie Heizung, zuführbar ist.

Ferner ist es vorteilhaft, dass die im Carbonisierungsreaktor und/oder im Abkühlbehälter freigesetzten Schadstoffe oder Störstoffe mit Hilfe einer thermischen Einrichtung vernichtbar oder zumindest teilweise vernichtbar oder ableitbar sind.

Vorteilhaft ist es auch, dass der Vergaserreaktor über eine Leitung an eine Verarbeitungseinrichtung zur Behandlung und/oder Weiterverarbeitung der im Vergaserreaktor gewonnenen Kohle angeschlossen ist.

Vorteilhaft ist es, dass der Abkühlbehälter und/oder der Vergaserreaktor über die Leitung mit der Verarbeitungseinrichtung zur Behandlung oder Weiterverarbeitung der im Behälter und/oder im Vergaserreaktor gewonnenen Kohle verbunden ist.

Von besonderer Bedeutung ist für die vorliegende Erfindung, dass im Vergaserreaktor Sattdampf gewonnen werden kann, der über eine Sattdampf führende Leitung mit einem Verbraucher oder mit einer Heizung und/oder einem Dampfkolbenmotor verbunden ist.

Auch ist es vorteilhaft, dass der Vergaserreaktor über mindestens eine Leitung mit einem Verbraucher oder zumindest mit einem Gasverdichter und/oder Gasmotor verbunden ist.

Ferner ist es vorteilhaft, dass der Vergaserreaktor und/oder der Abkühlbehälter über eine Kühleinrichtung gekühlt werden kann, oder von je einem Kühlmantel umgeben ist und die Kühleinrichtung mit Kühlwasser gespeist wird, wobei zumindest auch Kühlwasser aus dem Kühlmantel des Abkühlbehälters über eine Leitung dem Vergaserreaktor zugeführt wird.

Auch ist es von Vorteil, dass in einer oder mehreren Leitungen Schaltventile vorgesehen sind, die manuell oder über eine Antriebsvorrichtung aus- oder eingeschaltet werden können, wobei die Antriebsvorrichtungen über einen Rechner in Abhängigkeit des Arbeitsprozesses gesteuert werden können.

Ferner ist es vorteilhaft, dass das Verfahren durch folgende Verfahrensschritte gekennzeichnet ist:
a) Die Biomasse wird in einen Carbonisierungsreaktor mit Hilfe von Fremdwärmeenergie und weiterer Wärmeenergie, die aus der Anlage dem Carbonisierungsreaktor zugeführt wird, in einen festen, schüttbaren oder gasförmigen Energie- und/oder Rohstoffträger umgewandelt;
b) das im Carbonisierungsreaktor gebildete Gas wird in einen Reaktionsgasspeicher aufgenommen;
c) das im Carbonisierungsreaktor und Abkühlbehälter gewonnene oder befindliche Reaktionsgas wird mittel- oder unmittelbar dem Vergaserreaktor zugeführt;
d) zumindest ein Teil der in dem Verfahren zur thermochemischen Carbonisierung und Vergasung von Feuchtigkeits-, insbesondere wasserhaltiger und/oder trockener, Biomasse gewonnene Energie wird wieder dem Verarbeitungsprozess, insbesondere dem Carbonisierungsreaktor, zugeführt;
e) die im Vergaserreaktor gewonnene Kohle wird einer weiteren Verarbeitungseinrichtung zugeführt;
f) die im Abkühlbehälter eingespeiste Kühlenergie wird gleichzeitig oder anschließend dem Kühlmantel des Vergaserreaktors zugeführt;
g) die im Vergaserreaktor erzeugte freiwerdende Energie oder der Sattdampf wird einem oder mehreren Verbrauchern, wie Heizung und/oder einem Dampfkolbenmotor, zugeführt.

Weitere Vorteile und Einzelheiten der Erfindung sind in den Patentansprüchen und in der Beschreibung erläutert und in den Figuren dargestellt.

Dabei zeigen:
- Fig. 1: den Verfahrensablauf für eine Vorrichtung zur thermochemischen Carbonisierung und Vergasung von Feuchtigkeits- insbesondere wasserhaltiger und/oder trockner Biomasse zur Herstellung eines Energie- und/oder Rohstoffträgers mit Hilfe eines eine verschließbare Einlassöffnung aufweisenden, beheizbaren Carbonisierungsreaktors, in dem die Biomasse in einen festen, schüttbaren oder gasförmigen Energie- und/oder Rohstoffträger umgewandelt wird,

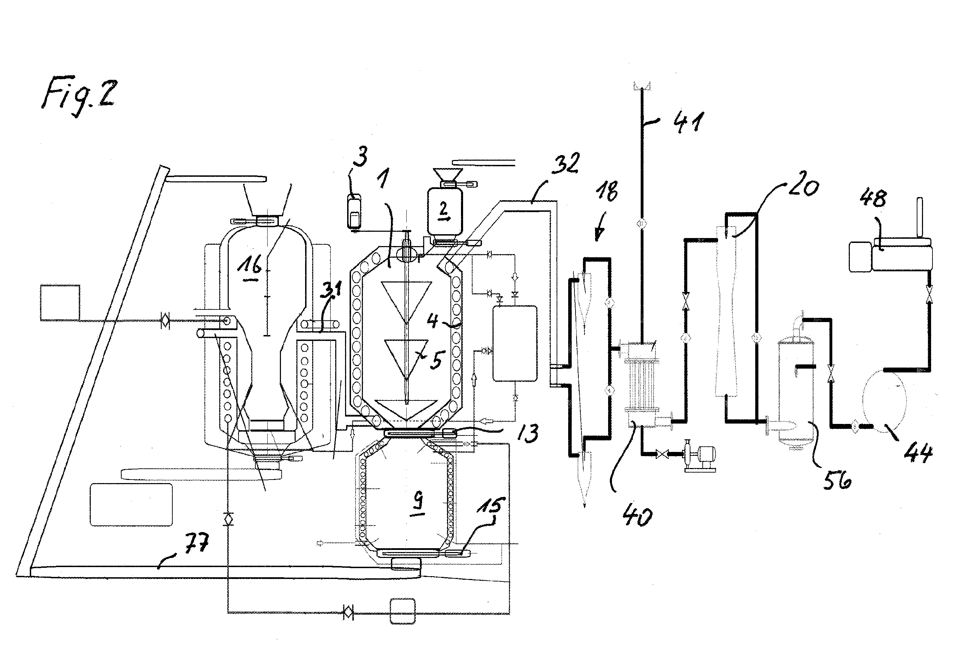

- Fig. 2: eine Teilansicht einer Vorrichtung zur thermochemischen Carbonisierung und Vergasung von Feuchtigkeits- insbesondere wasserhaltiger und/oder trockner Biomasse zur Herstellung eines Energie- und/oder Rohstoffträgers,
- Fig. 3: die Gesamtanlage der Vorrichtung zur thermochemischen Carbonisierung und Vergasung von Feuchtigkeits- insbesondere wasserhaltiger und/oder trockner Biomasse zur Herstellung eines Energie- und/oder Rohstoffträgers,
- Fig. 4: eine Teilansicht des Vergaserreaktors mit einem Vergaserkopf eines Vergasermittelteils und eines Vergaserfußes.

In Fig. 1 ist ein Carbonisierungsreaktor **1** zur thermochemischen Carbonisierung und Vergasung von Feuchtigkeits-, insbesondere wasserhaltiger und/oder trockener, Biomasse zur Herstellung eines Energie- und/oder Rohstoffträgers gezeigt. Der Carbonisierungsreaktor, wird über einen Aufnahmebehälter 2 mit Biomasse versorgt, der mit einem Einlassschieber oder Flachschieber 13 und einem Flach- oder Auslassschieber 15 versehen ist. In dem Carbonisierungsreaktor **1** ist ein Rührwerk 5 vorgesehen, in dem die Biomasse vermischt wird, die aus einer Feuchtigkeits-, insbesondere wasserhaltiger und/oder trockener, Biomasse besteht. Hierzu können unter anderem Abfälle, wie Nahrungsmittelreste, biologische Abfälle, Holz gehören. Das Rührwerk 5 kann manuell oder mit Hilfe eines Motors 3 angetrieben werden.

Bei Startbeginn der Gesamtanlage wird zuerst Holz bez. Holzkohle in einen Vergaserreaktor 16 gegeben und dann die Anlage hochgefahren. Das im Vergaserreaktor 16 gewonnene Reaktionsgas wird über eine Leitung 32 einem Heizelement 4 zugeführt, das den Carbonisierungsreaktor **1** umgibt. Hierdurch wird die Carbonisierung in Gang gesetzt. Das in dem Heizelement 4 aufgenommene Gas wird durch Einführung von Biomasse ständig gekühlt. Durch diesen Arbeitsprozess wird Energie gespart. Die hierbei auftretende Verlustenergie wird durch Fremdenergie der Anlage zugeführt.

Der Carbonisierungsreaktor **1** ist mit einem Heizelement wirkungsmäßig verbunden, insbesondere von einem Heizmantel 4 umgeben. Dem Carbonisierungsreaktor **1** wird zumindest Fremdwärmeenergie 60 und in vorteilhafter, Energie sparender Weise weitere Wärmeenergie zumindest aus der Gesamtanlage, insbesondere aus einem Vergaserreaktor 16, zugeführt, sodass auf diese Weise die Anlage sehr kostengünstig betrieben werden kann. Die Biomasse kann kontinuierlich oder diskontinuierlich dem Carbonisierungsreaktor 1 zugeführt werden. Im oberen Teil des Carbonisierungsreaktors 1 ist ein Überdruckventil 7 zur Druckregulierung des Carbonisierungsreaktors 1 vorgesehen. Wird die Biomasse diskontinuierlich dem Carbonisierungsreaktor 1 zugeführt, so wird der Carbonisierungsreaktor 1 mit kalter oder auch gewärmter Biomasse gefüllt und mit Hilfe des Heizelements so aufgeheizt, dass das in der Biomasse befindliche Wasser verdampft. Der Dampf wird einem Reaktionsspeicher 21 zugeführt, so dass die Energie, die auch dem Vergaserreaktor 16 zur Verfügung gestellt wird, vollständig genutzt werden kann. Bei weiterer Wärmezufuhr über ca. 180° C setzt die chemische Reaktion ein und es entstehen aus der Biomasse weitgehend Kohle und gasförmige Reaktionsprodukte.

Das vom Carbonisierungsreaktor 1 abgeführte Reaktionsgas weist eine Temperatur von mindestens 300 - 400°C auf. Dies wird zumindest teilweise über die Leitung 28 in den Reaktionsgasspeicher 21 und von dort in den Vergaserreaktor 16 geleitet. In der Leitung 28 befindet sich ein Rückschlagventil 80, damit Überdruck aus dem Reaktionsgasspeicher 21 nicht zum Carbonisierungsreaktor 1 entweichen kann.

Im Reaktionsgasspeicher 21 wird das Gas über die Kühleinrichtung 49, die über eine Leitung 51 und 30 an den Abkühlbehälter 9 angeschlossen ist, auf eine Temperatur von ca. 80° gekühlt. Im Abkühlbehälter 9 und im Reaktionsgasspeicher 21 herrscht ein Druck von ca. 2 bis 5 bar. Das Kühlwasser wird vom Reaktionsgasspeicher 21 über eine Leitung 78 zum Kühlmantel 52 des Vergaserreaktors 16 geleitet. Hierdurch lässt sich mehr Sattdampf produzieren. Über die Leitung 78 kann der Reaktionsgasspeicher 21 zum Vergaserreaktor 16 vollständig entleert werden.

Im Behälter 16 sind verschiedene Messpunkte 81 vorgesehen, mit deren Hilfe die Temperatur im Behälter 16 gesteuert werden kann.

Der Gasspeicher 21 hat eine Regulierungsfunktion und dient zur Aufnahme der Reaktionsgase aus Carbonisierungsreaktor 1 und Abkühlbehälter 9. Das Reaktionsgas aus dem Reaktionsgasspeicher 21 wird im Vergaserreaktor 16 mit der Kohle verbrannt.

Bei der Verbrennung des Reaktionsgases und der Kohle im Vergaserreaktor 16 entsteht Synthesegas, das dann einem oder mehreren Verbrauchern, wie Gasmotor, zugeführt wird.

Nach Erreichen der notwendigen Reaktionstemperatur beginnt die chemische Reaktion in der Biomasse und es bilden sich neben der Biokohle auch Gas, überwiegend CO₂ und Wasserdampf. Dieses Gas-Dampfgemisch wird als Reaktionsabgas bezeichnet. Der Gesamtdruck innerhalb des Reaktors ergibt sich aus der Summe Siededruck des Wasserdampfs und dem Partialdruck des Inertgasanteils im Carbonisierungsreaktor 1. Die Reaktion ist mit einer Wärmebildung verbunden, d. h. es findet eine exotherme Reaktion im Behälter statt. Zur Druckbegrenzung weist der Carbonisierungsreaktor 1 das druckgeregelte oder gesteuerte Ventil 7 auf. Nach Abschluss der Reaktion wird der Carbonisierungsreaktor 1 durch vollständiges Öffnen des Ventils 7 soweit druckentlastet, dass er gefahrlos geöffnet und die Biokohle entnommen werden kann.

Bei kontinuierlichem Betrieb wird die Biomasse dem Carbonisierungsreaktor 1 in kleinen Mengen und in kurzen Zeitabständen über eine Druckschleuse, nachstehend als Abkühlbehälter 9 bezeichnet, von oben zugeführt. Im Carbonisierungsreaktor **1** herrscht ständig hoher Druck und hohe Temperatur in etwa 16 bar und 200°C. Die zugeführte Biomasse erwärmt sich im Carbonisierungsreaktor 1 und das darin befindliche Wasser verdampft zumindest teilweise, oder je nach Prozessdauer auch vollständig. Die reagierende Biomasse durchläuft den Reaktor von oben nach unten, wobei sie ständig gerührt wird. Nachdem Reaktionsprozess wird dem Abkühlbehälter 9, auch als Druckschleuse bezeichnet, Kohle entnommen. Zur Begrenzung des Behälterdrucks wird beständig Reaktionsabgas mittels Druckregelventil 7 aus dem C-Reaktor abgelassen. Die Abkühlbehälter 9 kann auch als Druckschleuse ausgeführt sein.

Damit während des Arbeitsprozesses der Biokohle genügend Feuchte im Abkühlbehälter 9 zur Verfügung gestellt werden kann, wird ihm über die Kühleinrichtung 49 und die Leitung 51 Frischwasser zugeführt. Ferner kann der Abkühlbehälter 9 mit einem Rührwerk ausgestattet sein, um eine bessere Durchdringung der Biokohle mit Feuchte sicherzustellen.

Die Anlage kann auch zyklisch bzw. mit wechselndem Druck betrieben werden, wobei im Carbonisierungsreaktor 1 ein Druck von ca. 20 bar und eine Temperatur von 200° C vorhanden sind. Die im zweiten Behälter, der ein Abkühlbehälter 9 sein kann, befindliche Biokohle wird abgekühlt. Hierzu weist der Abkühlbehälter 9 einen Kühlmantel 51 auf. Der Druck im Abkühlbehälter 9 wird ebenfalls durch ein druckgeregeltes Ventil 12 in Abhängigkeit der Prozessführung gesteuert. Je nach Prozessführung kann die im Carbonisierungsreaktor 1 aufgenommene feuchtigkeitshaltige Biomasse bei Drücken zwischen 5 und 30 bar, vorzugsweise bei Drücken zwischen 15 und 25 bar, insbesondere bei Drücken von etwa 20 bar und bei Temperaturen zwischen 200° und 1200° C, vorzugsweise zwischen 400° und 800° C, verdampfen und Reaktionsgas gebildet werden, das mittel- oder unmittelbar dem Vergaserreaktor 16 über eine Leitung 30 zugeführt wird.

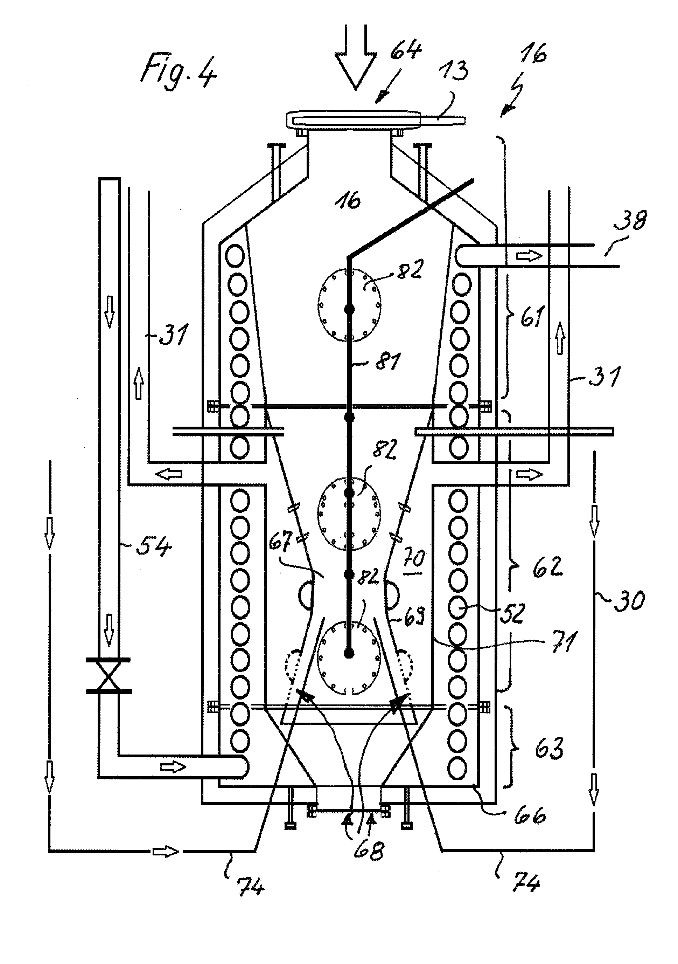

Der Vergaserreaktor 16 gemäß Fig. 1 bzw. gemäß Fig. 4 (Teildarstellung) arbeitet mit atmosphärischem Druck. Er ist in einen Vergaserkopf 61, ein Vergasermittelteil 62 und einen Vergaserfuß 63 unterteilt. Die im Abkühlbehälter 9 aufgenommene Biokohle wird über eine Einfüllöffnung 64 in den Vergaserkopf 61 geleitet. Dort erwärmt sie sich durch Wärmezufuhr aus dem Vergasermittelteil 62 auf eine Temperatur bis zu ca. 900° C, bei der die weitere Vergasung der Kohle bzw. Biokohle einsetzt.

Mit dieser Temperatur erreicht die Biokohle das Mittelteil 62 des Vergaserreaktors 16. Dort findet die Vergasung bei Temperaturen über 900° C statt. Das dabei aus der Biokohle austretende Reaktionsgas erreicht Temperaturen bis 1800°C. Durch eine gezielte Steuerung des Reaktionsprozesses mit Hilfe eines Rechners durch manuelle Steuerung wird die Temperatur der im Vergaserreaktor 16 verbleibenden Feststoffe derart begrenzt, dass die Asche nicht schmilzt.

Wie aus Fig. 4 hervorgeht besteht der Vergaserreaktor 16 aus einem äußeren Gehäusemantel 66, in dem ein Reaktorgehäuse 67 in einem trichterförmigen Teil untergebracht ist, das im oberen Bereich einen größeren Querschnitt als im mittleren Bereich aufweist. Der Vergaser-Reaktorfuß 63 erweitert sich in Richtung seines Auslassendes. Das Auslassende besteht aus mehreren im Vergaser-Reaktorfuß 63 vorgesehenen Auslassöffnungen 68 für die Abgabe des Reaktorgases und der Asche.

Das Reaktorgas wird über die Auslassöffnungen 68 in der perforierten, teilweise zylindrisch oder konisch erweiterten, inneren Wand 69 des Vergaser-Reaktorfußes 63 in einen Ringspalt 70 geleitet, der zwischen der Außenwand 71 und der inneren Wand 69 des Vergaser-Reaktorfußes 63 gebildet ist.

Der Vergaserreaktor 16 ist ferner mittel- oder unmittelbar an eine Reinigungsvorrichtung, wie Zyklonabscheider 18 und/oder Gaswäscher 20 angeschlossen. Von dort aus gelangt das Gas zu einem Gasverdichter 44 und/oder zu einem Gasmotor 48.

Der Vergaserreaktor 16 ist auch über die Leitung 30 an den Reaktionsgasspeicher 21 (Fig. 1) angeschlossen. Ferner weist der Vergaserreaktor 16 Wartungsöffnungen 82 auf, die im Bedarfsfall geöffnet werden können.

Im oberen Teil des Gehäusemantels 66 des Vergaserreaktors 16 befinden sich eine oder mehrere am Umfang verteilte Austrittsöffnungen 72, durch die das Reaktorgas dem Vergaserreaktor 16 entnommen wird. Daran angeschlossene Leitungen 73 münden in einen oder mehrere Staubabscheider, die z. B. als Zyklonabscheider 18 ausgeführt sind und von denen aus das Reaktorgas einer weiteren Verwendung bzw. den Verbrauchern, wie Gasmotor 48 oder Gasverdichter 44 zugeführt wird. Die Asche tritt am unteren Ende des Vergaser-Reaktorfußes 63 über eine Auslassöffnung 65 aus und wird von dort mittels Transportvorrichtung zu einem Entsorgungsbehälter geleitet.

Im unteren Bereich des Außenumfangs des Vergasermittelteils 62 sind eine oder mehrere Gaslanzen 74 bzw. thermisch verbundene Schmelzaggregate 74 vorgesehen, sodass Reaktionsabgas 75 aus dem Carbonisierungsreaktor 1 und gegebenenfalls auch aus dem Abkühlbehälter in die Vergasungszone des Vergaserreaktors 16 eingedüst werden kann. Hierdurch werden mit Hilfe der hohen Temperaturen noch vorhandene Abfallstoffe, wie Schwefel- und Chlorverbindungen, verbrannt.

Der Vergaserreaktor 16 (Fig. 1 und 4) und/oder der Abkühlbehälter 9 werden über eine Kühleinrichtung 49 gekühlt und sind mit je einem Kühlmantel 51, 52 umgeben. Die Kühleinrichtung 49 wird mit Kühlwasser gespeist, wobei zumindest auch Kühlwasser aus dem Kühlmantel 51 des Abkühlbehälters 9 über eine Leitung 54 dem Vergaserreaktor 16 zugeführt werden kann.

Die durch das Kühlmittel aufgenommene Wärme kann zur Verdampfung des Kühlwassers und auch zur Überhitzung des so erzeugten Hochdruck-Dampfes 76 eingesetzt werden.

Der Vergaserreaktor 16 kann kontinuierlich betrieben werden. Die Biomasse wird in kurzen Zeitabständen oder kontinuierlich zugeführt. Das Reaktorgas und die Asche treten kontinuierlich als Volumen- bzw. Mengenströme aus dem Vergaserreaktor 16 aus.

Die beschriebenen Reaktoren 1 und 16 werden in etwa zeitgleich betrieben. Durch die Anordnung des Abkühlbehälters 9 und des Vergaserreaktors 16 gemäß Fig. 4 zu einer Betriebseinheit wird eine platzsparende Anordnung erzielt. Wie bereits erwähnt, befindet sich die Biomassezufuhr oberhalb der Gesamtvorrichtung, bestehend aus Carbonisierungsreaktor 1, Abkühlbehälter 9, Vergaserreaktor 16. Über die Eingangsdruckschleuse im Aufnahmebehälter 2 wird die Biomasse aufgenommen und dem Vergaserreaktor 16 zugeführt. Sie durchläuft diesen von oben nach unten und tritt nach erfolgter Carbonisierung in den Abkühlbehälter 9 ein. Im kontinuierlichen Betrieb des Abkühlbehälters 9, der Biokohle aus dem Carbonisierungsreaktor 1 aufnimmt, intermittierend betrieben. raturen zwischen 200° und 1200°C, vorzugsweise zwischen 400° und 800°C. Dabei wird auch Reaktionsgas gebildet, das mittel- oder unmittelbar dem Vergaserreaktor 16 über die Leitung 30 zugeführt wird.

Eine weitere Möglichkeit des Aufbaus der Gesamtvorrichtung, bestehend aus Carbonisierungsreaktor 1, Abkühlbehälter 9, und Vergaserreaktor 16 ist in Fig. 4 dargestellt. Diese bietet sich an, wenn aus Platzgründen eine Vertikalaufstellung nicht möglich ist.

Die aus dem Abkühlbehälter 9 austretende Biokohle wird mittels mechanischer Fördereinrichtungen, wie Förderband oder Förderschnecke 77, in den Einfülltrichter des daneben stehenden Vergaserreaktors 16 transportiert und diesem kontinuierlich zugeführt.

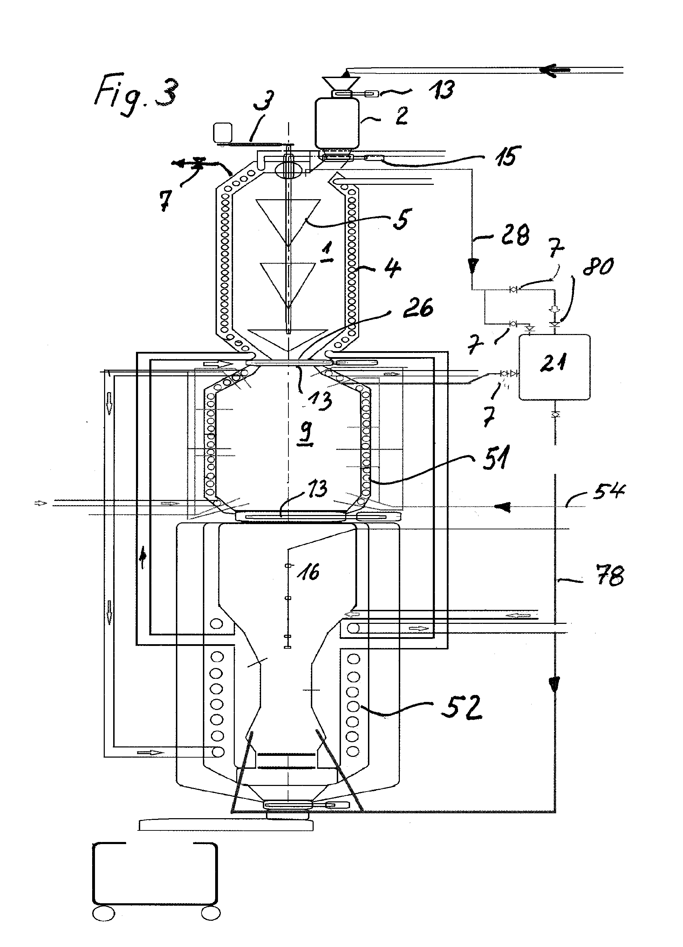

Ein Ablaufprozess der Gesamtanlage ist in Fig. 3 dargestellt.

Der Vergaserreaktor 16 ist über eine Leitung 34 an eine Weiterverarbeitungseinrichtung 36 zur Behandlung und/oder Weiterverarbeitung der im Vergaserreaktor 16 gewonnenen Kohle angeschlossen.

Der im Vergaserreaktor 16 gebildete Sattdampf wird über die Sattdampf führende Leitung 38 mit einem Verbraucher oder mit einer Heizung und/oder einem Dampfkolbenmotor 42 verbunden. Das in der Gesamtanlage oder im ersten Carbonisierungsreaktor 1 erzeugte Reaktionsgas wird mittel- oder unmittelbar dem Zyklonabscheider 18 und/oder Gaswäscher 20 und anschließend einem Entfeuchter 56 oder mittel- oder unmittelbar einem Verdichter 44 oder dem Verbraucher 48 zugeführt.

In einer oder mehreren Leitungen 26-34, 38, 50, 53, 54 können Schaltventile vorgesehen sein, die manuell oder über eine Antriebsvorrichtung aus- oder eingeschaltet werden können, wobei die Antriebsvorrichtungen über einen Rechner in Abhängigkeit des Arbeitsprozesses gesteuert werden.

### Analyse-Werte aus dem Stand der Technik HTC

### (Hydrothermale Carbonisierung) Holzkohle

| **Tabelle 1** | **Analyse** | **Luftgetrocknete Holzkohle HTC** | **Trockene Holzkohle HTC** |
|---|---|---|---|
| Promimate Analyse % | Feuchtigkeit | 8,8 | 0,0 |
| | Asche | 6,9 | 7,6 |
| | Flüchtende Bestandteile | 58,5 | 64,1 |
| | Fixer Kohlenstoff | 25,8 | 28,3 |
| Schwefel | Total Schwefel | 0,58 | 0,6 |
| Heizwerte in Kcal/kg | Unterer Heizwert Kcal / kg | 4668 | 5169 |
| | Oberer Heizwert Kcal / kg | 4969 | 5446 |
| Elementaranalyse | C | 53,86 | 59,0 |
| | H | 5,92 | 5,4 |
| | N | 5,36 | 5,9 |
| | O | 34,86 | 29,7 |

### Analyse-Werte der erfindungsgemäßen Anlage und Vorrichtung

| **Tabelle 2** | **Analyse** | **Original Holzkohle** | **Luftgetrocknete Holzkohle** | **Trockene Holzkohle** |
|---|---|---|---|---|
| Promimate Analyse % | Feuchtigkeit | 34.9 % | 21.6 % | 0,0 % |
| | Asche | 1,9 % | 2,3 % | 2,9 % |
| | Flüchtende Bestandteile | 24,2 % | 29,2 % | 37,2 % |
| | Fixer Kohlenstoff | 39,0 | 46,9 | 59,9 |
| Schwefel | Total Schwefel | 0,2 | 0,2 | 0,2 |
| Heizwerte in Kcal/kg | Unterer Heizwert Kcal / kg | 4382 | 5392 | 7030 |
| | Oberer Heizwert Kcal /kg | 4730 | 5699 | 7269 |
| Elementaranalyse | C | 63,2 | | 83,64 |
| | H | 5,56 | | 4 |
| | N | 0,22 | | 0,29 |
| | O | 30,82 | | 14,89 |

## Patentansprüche

1. Vorrichtung zur thermochemischen Carbonisierung und Vergasung von Feuchtigkeits-, insbesondere wasserhaltiger und/oder trockener, Biomasse zur Herstellung eines Energie- und/oder Rohstoffträgers mit Hilfe eines eine verschliessbare Einlassöffnung (13) aufweisenden, beheizbaren Carbonisierungsreaktors (1), in dem die Biomasse in einen festen, schüttbaren oder gasförmigen Energie- und/oder Rohstoffträger umgewandelt wird und über eine verschliessbare Auslassöffnung (14) an einen an den Carbonisierungsreaktor (1) angeschlossenen Abkühlbehälter (9) zur Zwischenlagerung des Energie- und/oder Rohstoffträgers abgegeben wird, der mit einem sich daran anschliessenden Vergaserreaktor (16) in Verbindung steht, in dem aus der Biomasse Gas und Abfallstoffe, wie Asche, abgeschieden werden,
**gekennzeichnet durch folgende Merkmale:**
a) dem Carbonisierungsreaktor (1), der mit einem Heizelement (4) wirkungsmässig verbunden, insbesondere von einem Heizmantel umgeben ist, ist Fremdwärmeenergie (60) zuführbar und über eine weitere den Vergaserreaktor (16) und den Carbonisierungsreaktor (1) verbindende Leitung (31) weitere Wärmeenergie zumindest aus dem Vergaserreaktor (16) zuführbar.
b) dem Vergaserreaktor ist über eine den Vergaserreaktor (16) und den Abkühlbehälter (9) verbindende Leitung (54) Kühlenergie aus dem Abkühlbehälter (9) zuführbar,
c) dem Abkühlbehälter (9) ist Feuchtigkeit, insbesondere Wasser, über eine weitere Leitung (51) zuführbar, um eine annähernd konstante Prozessführung sicherzustellen,
d) aus dem Carbonisierungsreaktor (1) und/oder dem Abkühlbehälter (9) ist Reaktionsgas über eine den Carbonisierungsreaktor (1) und den Gasspeicher (21) verbindende Leitung (28, 30) einem Gasspeicher (21) zuführbar, wobei das Reaktionsgas über eine den Vergaserreaktor (16) und den Gasspeicher (21) verbindende Leitung (78) wieder dem Vergaserreaktor (16) zuführbar ist.

2. Vorrichtung nach Anspruch 1
**dadurch gekennzeichnet,**
**dass** die im Carbonisierungsreaktor (1) aufgenommene feuchtigkeitshaltige Biomasse bei Drücken zwischen 5 und 30 bar, vorzugsweise bei Drücken zwischen 15 und 25, insbesondere bei Drücken von etwa 20 bar und bei Temperaturen zwischen 200° und 1200°C, vorzugsweise zwischen 400° und 800°C, verdampft und Reaktionsgas gebildet wird, das mittel- oder unmittelbar dem Vergaserreaktor (16) über eine Leitung (30) zuführbar ist.

3. Vorrichtung nach Anspruch 1 oder 2
**dadurch gekennzeichnet,**
**dass** der Vergaserreaktor (16) in einem Temperaturbereich zwischen 1200° und 1800°C, vorzugsweise zwischen 1000° und 1400°C, arbeitbar und während des Arbeitsprozesses Wärmeenergie über eine den Vergaserreaktor (16) und den Carbonisierungsreaktor (1) verbindende Leitung (31) abgebbar ist.

4. Vorrichtung nach einem der vorhergehenden Ansprüche,
**dadurch gekennzeichnet,**
**dass** ein Zyklonabscheider (18) und/oder Gasreiniger (20) über eine Leitung (22) an den Vergaserreaktor (16) angeschlossen ist, wobei zwischen Zyklonabscheider (18) und/oder Gasreiniger (20) ein Wärmetauscher vorgesehen sein kann, der Gas auf die Betriebstemperatur des Wärmetauschers zwischen 40°C und 80°C oder zwischen 50°C und 60°C absenken kann und die daraus resultierende abgeführte Energie einer Heizung und/oder dem Arbeitsprozess der Anlage wieder zuführbar und die vom Wärmetauscher (40) abgegebene Wärmeenergie über eine Leitung (41) einem Verbraucher, wie Heizung, zuführbar ist.

5. Vorrichtung nach einem der vorhergehenden Ansprüche,
**dadurch gekennzeichnet,**
**dass** die im Carbonisierungsreaktor (1) und/oder im Abkühlbehälter (9) freigesetzten Schadstoffe oder Störstoffe mit Hilfe einer thermischen Einrichtung vernichtbar oder zumindest teilweise vernichtbar oder ableitbar sind.

6. Vorrichtung nach Anspruch 1
**dadurch gekennzeichnet,**
**dass** der Vergaserreaktor (16) über eine Leitung (34) an eine Verarbeitungseinrichtung (36) zur Behandlung und/oder Weiterverarbeitung der im Vergaserreaktor (16) gewonnenen Kohle angeschlossen ist.

7. Vorrichtung nach einem der vorhergehenden Ansprüche,
**dadurch gekennzeichnet,**
**dass** der Abkühlbehälter (9) und/oder der Vergaserreaktor (16) über die Leitung (34) mit der Verarbeitungseinrichtung (36) zur Behandlung oder Weiterverarbeitung der im Behälter (9) und/oder im Vergaserreaktor (16) gewonnenen Kohle verbunden ist.

8. Vorrichtung nach einem der vorhergehenden Ansprüche,
**dadurch gekennzeichnet,**
**dass** im Vergaserreaktor (16) Sattdampf gewonnen werden kann, der über eine Sattdampf führende Leitung (42) mit einem Verbraucher oder mit einer Heizung und/oder einem Dampfkolbenmotor verbunden ist.

9. Vorrichtung nach einem der vorhergehenden Ansprüche,
**dadurch gekennzeichnet,**
**dass** der Vergaserreaktor (16) über mindestens eine Leitung (53) mit einem Verbraucher oder zumindest mit einem Gasverdichter und/oder Gasmotor (48) verbunden ist.

10. Vorrichtung nach einem der vorhergehenden Ansprüche,
**dadurch gekennzeichnet,**
**dass** der Vergaserreaktor (16) und/oder der Abkühlbehälter (9) über eine Kühleinrichtung (49) gekühlt werden kann, oder von je einem Kühlmantel (51, 52) umgeben ist und die Kühleinrichtung (49) mit Kühlwasser gespeist wird, wobei zumindest auch Kühlwasser aus dem Kühlmantel (51) des Abkühlbehälters (9) über eine Leitung (54) dem Vergaserreaktor (16) zugeführt wird.

11. Vorrichtung nach einem der vorhergehenden Ansprüche,
**dadurch gekennzeichnet,**
**dass** in einer oder mehreren Leitungen (26-34, 38, 40, 50, 53, 54) Schaltventile vorgesehen sind, die manuell oder über eine Antriebsvorrichtung aus- oder eingeschaltet werden können, wobei die Antriebsvorrichtungen über einen Rechner in Abhängigkeit des Arbeitsprozesses gesteuert werden können.

12. Verfahren zur thermochemischen Carbonisierung und Vergasung von Feuchtigkeits-, insbesondere wasserhaltiger und/oder trockener, Biomasse zur Herstellung eines Energie- und/oder Rohstoffträgers aus feuchtigkeitshaltiger und/oder trockener Biomasse unter Verwendung der Vorrichtung nach einem der vorhergehenden Ansprüche 1-11
**gekennzeichnet durch folgende Verfahrensschritte:**
a) Die Biomasse wird in einen Carbonisierungsreaktor (1) mit Hilfe von Fremdwärmeenergie (60) und weiterer Wärmeenergie, die aus der Anlage dem Carbonisierungsreaktor (1) zugeführt wird, in einen festen, schüttbaren oder gasförmigen Energie- und/oder Rohstoffträger umgewandelt;
b) das im Carbonisierungsreaktor (1) gebildete Gas wird in einen Reaktionsgasspeicher (21) aufgenommen;
c) das im Carbonisierungsreaktor und Abkühlbehälter gewonnene oder befindliche Reaktionsgas wird mittel- oder unmittelbar dem Vergaserreaktor (16) zugeführt;
d) zumindest ein Teil der in dem Verfahren zur thermochemischen Carbonisierung und Vergasung von Feuchtigkeits-, insbesondere 4 wasserhaltiger und/oder trockener, Biomasse gewonnene Energie wird wieder dem Verarbeitungsprozess, insbesondere dem Carbonisierungsreaktor (1), zugeführt;
e) die im Vergaserreaktor (16) gewonnene Kohle wird einer weiteren Verarbeitungseinrichtung (36) zugeführt;
f) die im Abkühlbehälter (9) eingespeiste Kühlenergie wird gleichzeitig oder anschließend dem Kühlmantel (52) des Vergaserreaktors (16) zugeführt;
g) die im Vergaserreaktör (16) erzeugte freiwerdende Energie oder der Sattdampf wird einem oder mehreren Verbrauchern, wie Heizung und/oder einem Dampfkolbenmotor, zugeführt.

## Claims

1. Device for the thermochemical carbonization and gasification of wet, especially water-containing, and/or dry biomass for producing an energy carrier and/or raw-material carrier by means of a heatable carbonization reactor (1) having a closable inlet (13), in which the biomass is converted into a solid, pourable or gaseous energy carrier and/or raw-material carrier and is discharged via a closable outlet (14) to a cooling vessel (9) connected to the carbonization reactor (1) for interim storage of the energy carrier and/or raw-material carrier, which is connected to a downstream gasification reactor (16), in which gas and waste substances, such as ash, are separated from the biomass, **characterized by the following features**:
a) external thermal energy (60) can be supplied to the carbonization reactor (1), which is connected operatively to a heating element (4), in particular is surrounded by a heating jacket, and further thermal energy can be supplied at least from the gasification reactor (16) via a further line (31) connecting the gasification reactor (16) and the carbonization reactor (1),
b) cooling energy from the cooling vessel (9) can be supplied to the gasification reactor via a line (54) connecting the gasification reactor (16) and the cooling vessel (9),
c) moisture, especially water, can be supplied to the cooling vessel (9) via a further line (51), to ensure an almost continuous process,
d) from the carbonization reactor (1) and/or the cooling vessel (9), reaction gas can be supplied to a gas storage tank (21) via a line (28, 30) connecting the carbonization reactor (1) and the gas storage tank (21), wherein the reaction gas can be recycled to the gasification reactor (16) via a line (78) connecting the gasification reactor (16) and the gas storage tank (21).

2. Device according to Claim 1, **characterized in that** the moisture-containing biomass received in the carbonization reactor (1) is evaporated at pressures between 5 and 30 bar, preferably at pressures between 15 and 25 bar, especially at pressures of about 20 bar and at temperatures between 200° and 1200°C, preferably between 400° and 800°C, and reaction gas is formed, which can be supplied directly or indirectly to the gasification reactor (16) via a line (30).

3. Device according to Claim 1 or 2, **characterized in that** the gasification reactor (16) can be operated in a temperature range between 1200° and 1800°C, preferably between 1000° and 1400°C, and during the working process thermal energy can be released via a line (31) connecting the gasification reactor (16) and the carbonization reactor (1).

4. Device according to one of the preceding claims, **characterized in that** a cyclone separator (18) and/or gas scrubber (20) is connected via a line (22) to the gasification reactor (16), wherein a heat exchanger can be provided between the cyclone separator (18) and/or gas scrubber (20), which can lower gas to the working temperature of the heat exchanger between 40°C and 80°C or between 50°C and 60°C and the resultant abstracted energy can be recycled to a heating system and/or to the working process of the plant and the thermal energy released from the heat exchanger (40) can be supplied via a line (41) to a consumer, such as a heating system.

5. Device according to one of the preceding claims, **characterized in that** the harmful substances or impurities released in the carbonization reactor (1) and/or in the cooling vessel (9) can be destroyed or at least partially destroyed by means of a thermal device or can be led away.

6. Device according to Claim 1, **characterized in that** the gasification reactor (16) is connected via a line (34) to a processing device (36) for treatment and/or further processing of the coal obtained in the gasification reactor (16).

7. Device according to one of the preceding claims, **characterized in that** the cooling vessel (9) and/or the gasification reactor (16) is connected via the line (34) to the processing device (36) for treatment or further processing of the coal obtained in the vessel (9) and/or in the gasification reactor (16).

8. Device according to one of the preceding claims, **characterized in that** saturated steam can be obtained in the gasification reactor (16), which is connected via a line conveying saturated steam (42) to a consumer or to a heating system and/or a steam piston engine.

9. Device according to one of the preceding claims, **characterized in that** the gasification reactor (16) is connected via at least one line (53) to a consumer or at least to a gas compressor and/or gas engine (48).

10. Device according to one of the preceding claims, **characterized in that** the gasification reactor (16) and/or the cooling vessel (9) can be cooled by means of a cooling device (49), or in each case is surrounded by a cooling jacket (51, 52) and the cooling device (49) is fed with cooling water, wherein at least also cooling water from the cooling jacket (51) of the cooling vessel (9) is supplied via a line (54) to the gasification reactor (16).

11. Device according to one of the preceding claims, **characterized in that** in one or more lines (26-34, 38, 40, 50, 53, 54), control valves are provided, which can be turned off or on manually or by a drive device, wherein the drive devices can be controlled via a computer in relation to the working process.

12. Method of thermochemical carbonization and gasification of wet, especially water-containing and/or dry, biomass for producing an energy carrier and/or raw-material carrier from moisture-containing and/or dry biomass using the device according to one of the preceding Claims 1-11, **characterized by the following method steps:**
a) the biomass is converted in a carbonization reactor (1) by means of external thermal energy (60) and further thermal energy, which is supplied from the plant to the carbonization reactor (1), into a solid, pourable or gaseous energy carrier and/or raw-material carrier;
b) the gas formed in the carbonization reactor (1) is received in a reaction gas storage tank (21);
c) the reaction gas obtained or present in the carbonization reactor and cooling vessel is supplied directly or indirectly to the gasification reactor (16) ;
d) at least a proportion of the energy obtained in the method of thermochemical carbonization and gasification of wet, especially water-containing and/or dry, biomass is recycled to the processing process, especially to the carbonization reactor (1);
e) the coal obtained in the gasification reactor (16) is supplied to a further processing device (36);
f) the cooling energy fed in the cooling vessel (9) is supplied simultaneously or subsequently to the cooling jacket (52) of the gasification reactor (16);
g) the released energy produced in the gasification reactor (16) or the saturated steam is supplied to one or more consumers, such as a heating system, and/or to a steam piston engine.

## Revendications

1. Dispositif pour la carbonisation thermochimique et la gazéification d'une biomasse contenant de l'humidité, notamment de l'eau et/ou sèche, pour la production d'une source d'énergie et/ou de matière première à l'aide d'un réacteur de carbonisation (1) pouvant être chauffé, comportant un orifice d'entrée (13) fermable, dans lequel la biomasse est transformée en une source d'énergie et/ou de matière première solide, en vrac ou gazeuse et est restituée par l'intermédiaire d'un orifice de sortie (14) fermable dans un réservoir réfrigérant (9) raccordé sur le réacteur de carbonisation (1) pour le stockage intermédiaire de la source d'énergie et/ou de matière première, qui est en liaison avec un réacteur de gazéification (16) qui s'y raccorde, dans lequel le gaz et les déchets, tels que de la cendre sont séparés de la biomasse,
**caractérisé par** les attributs suivants :
a) de l'énergie de chauffage extérieure (60) peut être alimentée et par l'intermédiaire d'un conduit (31) reliant le réacteur de gazéification (16) et le réacteur de carbonisation (1), de l'énergie de chauffage supplémentaire peut être alimentée au moins à partir du réacteur de gazéification (16) vers le réacteur de carbonisation (1) qui est relié de manière fonctionnelle avec un élément chauffant (4), notamment entouré d'une enveloppe chauffante,
b) par l'intermédiaire d'un conduit (54) reliant le réacteur de gazéification (16) et le réservoir réfrigérant (9), de l'énergie de refroidissement peut être alimentée vers le réacteur de gazéification, à partir du récipient réfrigérant (9),
c) par l'intermédiaire d'un conduit (51) supplémentaire, de l'humidité, notamment de l'eau peut être alimentée vers le réservoir réfrigérant (9), pour assurer une gestion du processus approximativement constante,
d) par l'intermédiaire d'un conduit (28, 30) reliant le réacteur de carbonisation (1) et l'accumulateur de gaz (21), du gaz réactif peut être alimenté vers un accumulateur de gaz (21), à partir du réacteur de carbonisation (1) et/ou du réservoir réfrigérant (9), par l'intermédiaire d'un conduit (78) reliant le réacteur de gazéification (16) et l'accumulateur de gaz (21), le gaz réactif pouvant être réalimenté vers le réacteur de gazéification (16).

2. Dispositif selon la revendication 1,
**caractérisé en ce**
**qu'**on fait évaporer la biomasse contenant de l'humidité prélevée dans le réacteur de carbonisation (1) à des pressions comprises entre 5 et 30 bar, de préférence à des pressions comprises entre 15 et 25, notamment à des pressions d'environ 20 bar et à des températures comprises entre 200° et 1200°C, de préférence comprises entre 400° et 800°C et on créé du gaz réactif, qui peut être alimenté indirectement ou directement vers le réacteur de gazéification (16) par l'intermédiaire d'un conduit (30).

3. Dispositif selon la revendication 1 ou la revendication 2,
**caractérisé en ce que**
le réacteur de gazéification (16) peut travailler dans un ordre de températures compris entre 1200°C et 1800°C, de préférence, entre 1000°C et 1400°C et pendant le processus de travail, de l'énergie de chauffage peut être restituée par l'intermédiaire d'un conduit (31) reliant le réacteur de gazéification (16) et le réacteur de carbonisation (1).

4. Dispositif selon l'une quelconque des revendications précédentes,
**caractérisé en ce**
**qu'**un séparateur à cyclone (18) et/ou un épurateur de gaz (20) est raccordé par l'intermédiaire d'un conduit (22) sur le réacteur de gazéification (16), entre le séparateur à cyclone (18) et/ou l'épurateur de gaz (20) pouvant être prévu un échangeur thermique susceptible d'abaisser le gaz à la température de fonctionnement de l'échangeur thermique, comprise entre 40°C et 80°C ou comprise entre 50°C et 60°C et l'énergie évacuée qui en résulte pouvant être réalimentée vers un chauffage et/ou vers le processus de travail de l'installation et l'énergie de chauffage restituée par l'échangeur thermique (40) pouvant être alimentée par l'intermédiaire d'un conduit (41) vers un consommateur, tel qu'un chauffage.

5. Dispositif selon l'une quelconque des revendications précédentes,
**caractérisé en ce que**
les substances nocives ou substances interférentes libérées dans le réacteur de carbonisation (1) et/ou dans le réservoir réfrigérant (9) peuvent être détruites ou au moins en partie détruites ou évacuées à l'aide d'une installation thermique.

6. Dispositif selon la revendication 1,
**caractérisé en ce que**
le réacteur de gazéification (16) est raccordé par l'intermédiaire d'un conduit (34) sur une installation de traitement (36) destinée à traiter et/ou à transformer le charbon obtenu dans le réacteur de gazéification (16).

7. Dispositif selon l'une quelconque des revendications précédentes,
**caractérisé en ce que**
le réservoir réfrigérant (9) et/ou le réacteur de gazéification (16) est relié par l'intermédiaire du conduit (34) avec l'installation de traitement (36) pour le traitement ou la transformation du charbon obtenu dans le réservoir (9) et/ou dans le réacteur de gazéification (16).

8. Dispositif selon l'une quelconque des revendications précédentes,
**caractérisé en ce que**
dans le réacteur de gazéification (16), on peut obtenir de la vapeur saturée, qui par l'intermédiaire d'un conduit (42) conducteur de vapeur saturée est relié avec un consommateur ou avec un chauffage et/ou avec un moteur à piston à vapeur.

9. Dispositif selon l'une quelconque des revendications précédentes,
**caractérisé en ce que**
le réacteur de gazéification (16) est relié par l'intermédiaire d'au moins un conduit (53) avec un consommateur ou au moins avec un compresseur à gaz et/ou un moteur à gaz (48).

10. Dispositif selon l'une quelconque des revendications précédentes,
**caractérisé en ce que**
le réacteur de gazéification (16) et/ou le réservoir réfrigérant (9) peut être refroidi par l'intermédiaire d'un système réfrigérant (49) ou est entouré chaque fois par une enveloppe réfrigérante (51, 52) et le système réfrigérant (49) est alimenté en eau de refroidissement, de l'eau de refroidissement étant au moins alimentée également vers le réacteur de gazéification (16) à partir de l'enveloppe réfrigérante (51) du réservoir réfrigérant (9) par l'intermédiaire d'un conduit (54).

11. Dispositif selon l'une quelconque des revendications précédentes,
**caractérisé en ce que**
dans un ou dans plusieurs conduits (26 à 34, 38, 40, 50, 53, 54) sont prévues des soupapes de commande que l'on peut mettre à l'arrêt ou en marche manuellement ou par l'intermédiaire d'un dispositif d'entraînement, les dispositifs d'entraînement pouvant être commandés par l'intermédiaire d'un ordinateur, en fonction du processus de travail.

12. Procédé pour la carbonisation thermochimique et la gazéification d'une biomasse contenant de l'humidité, notamment de l'eau et/ou sèche, pour la production d'une source d'énergie et/ou de matière première à partir d'une biomasse contenant de l'humidité et/ou sèche, en utilisant le dispositif selon l'une quelconque des revendications 1 à 11,
**caractérisé par** les étapes de procédé suivantes :
a) Dans un réacteur de carbonisation (1), à l'aide d'énergie de chauffage (60) extérieure et d'énergie de chauffage supplémentaire qui est alimentée à partir de l'installation vers le réacteur de carbonisation (1), la biomasse est transformée en une source d'énergie et/ou de matière première solide, en vrac ou gazeuse ;
b) le gaz formé dans le réacteur de carbonisation (1) est récupéré dans un accumulateur (21) de gaz réactif ;
c) le gaz réactif obtenu ou se trouvant dans le réacteur de carbonisation et dans le réservoir réfrigérant est alimenté indirectement ou directement vers le réacteur de gazéification (16) ;
d) au moins une partie de l'énergie obtenue lors du procédé pour la carbonisation thermochimique et la gazéification d'une biomasse contenant de l'humidité, notamment de l'eau et/ou sèche est réalimentée vers le processus de traitement, notamment vers le réacteur de carbonisation (1) ;
e) le charbon obtenu dans le réacteur de gazéification (16) est alimenté vers une installation de traitement (36) supplémentaire ;
f) l'énergie de refroidissement introduite dans le réservoir réfrigérant (9) est alimentée simultanément ou par la suite vers l'enveloppe réfrigérante (52) du réacteur de gazéification (16) ;
g) l'énergie qui se libère, générée dans le réacteur de gazéification (16) ou la vapeur saturée est alimentée vers un ou vers plusieurs consommateurs, tels qu'un chauffage et/ou un moteur à piston à vapeur.
